(19) Europäisches Patentamt
European Patent Office
Office européen des brevets

(11) **EP 2 066 087 A1**

(12) **EUROPEAN PATENT APPLICATION**

(43) Date of publication:
**03.06.2009 Bulletin 2009/23**

(51) Int Cl.:
***H04L 12/56*** (2006.01)

(21) Application number: **07301610.7**

(22) Date of filing: **30.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **FRANCE TELECOM**
**75015 Paris (FR)**

(72) Inventors:
• **Bocquet, Wladimir**
**TOKYO Tokyo 135-0022 (JP)**
• **Lenglet, Romain**
**TOKYO Tokyo 160-0022 (JP)**
• **Coupe, Patrice**
**TOKYO Tokyo 160-0022 (JP)**

(54) **Telecommunication method and system**

(57) A method and a telecommunication system arranged for allocating capacity to an application data flow in an Orthogonal Frequency Code Division Multiple Access (OFCDMA) access network, the total capacity provided by the radio interface of said OFCDMA access network being spread over a plurality of codes, said application data flow requiring a level of Quality of Service (QoS), said method comprising the acts of selecting among the non allocated codes if any, one code that can ensure the application data flow level of QoS, and allocating the selected code to said application data flow; and selecting a plurality of codes when no single code can ensure said level of QoS , so that the allocation of said plurality of codes to the application data flow ensures said level of QoS.

Figure 1

**EP 2 066 087 A1**

**Description**

**Field of the Invention**

The present invention relates in general to a telecommunication system and method for allocating codes and resources to a user of an Orthogonal Frequency Code Division Multiple Access (OFCDMA) telecommunication access network.

**Background of the Invention**

Telecommunication networks provide a facility for communicating to and from a User Equipment (UE) through a radio air interface. Orthogonal Frequency Code Division Multiple Access (OFCDMA) networks are telecommunication access networks based on a technology using time, frequency and all codes to allocate radio resources for the users of the radio interface. Some solutions or models exist today for allocating radio resources to classes of Quality of Service (QoS), but as classes of QoS do not allow differentiating the application data flows, i.e. data flows comprising data of a given application, between them, said application data flows are not necessarily provided with the corresponding amount of radio bandwidth. An application data flow, e.g. a video streaming, may thus not be guaranteed with the appropriate Quality of Service (QoS), i.e. radio resources are not allocated efficiently (according to the capacity needed for each application flow) and some of them are wasted.

Today there is a need to better ensure the QoS for application data flows that can be easily implemented on the existing telecommunication infrastructures. There is a further need for a resource allocation method that contributes to a better QoS and a better radio resources allocation.

**Summary of Invention**

It is an object of the present system and method to overcome disadvantages and/or make improvement over the prior art. To that extend, the invention proposes a telecommunication method which is arranged for allocating radio resources, or capacity, to application data flows in an Orthogonal Frequency Code Division Multiple Access (OFCDMA) access network, the total capacity provided by the radio interface of said OFCDMA access network being spread over a plurality of codes, said application data flow requiring a level of Quality of Service (QoS), said method comprising the acts of:

- selecting among the non allocated codes if any, one code that can ensure the application data flow level of QoS, and allocating the selected code to said application data flow,
- selecting a plurality of codes when no single code can ensure said level of QoS, so that the allocation of said plurality of codes to the application data flow ensures said level of QoS.

Thank to the present method, a direct link or mapping is achieved between each application data flow (i.e. a single data flow of the application or service used by a user through a telecommunication network) and the resources of the OFCDMA radio interface. The required radio resources are allocated to each application data flow to ensure its own level of QoS. The invention also proposes a telecommunication system comprising:

- an Orthogonal Frequency Code Division Multiple Access (OFCDMA) access network, comprising a Base Station, the total capacity provided by the radio interface of said Base Station being spread over a plurality of codes,
- a telecommunication equipment, said telecommunication equipment exchanging an application data flow with said Base Station, said application data flow requiring a level of Quality of Service (QoS), the Base Station being arranged to:

- select among the non allocated codes if any, one code that can ensure the application data flow level of QoS, and allocate the selected code to said application data flow,
- select a plurality of codes when no single code can ensure said level of QoS, so that the allocation of said plurality of codes to the application data flow ensures said level of QoS.

In order to link or map directly application data flows on the OFCDMA radio interface, the Resource Reservation Protocol (RSVP) is used to reserve resources for those application data flows. Each flow is identified by two pairs of IP addresses and port numbers. RSVP provides the information on the associated QoS requested by a given application. An application data flow exchanged between an application server and a user hence contains the application data and the information on the associated QoS.

The invention also recites a Base Station arranged to carry out the present method.

The present system and method are particularly relevant in a Beyond 3G/4G context where the network is IP-based.

## Brief Description of the Drawings

Embodiments of the present invention will now be described by way of example only with reference to the accompanying drawings, where like parts are provided with corresponding reference numerals, and in which:

Figure 1 schematically illustrates the acts of the method according to one embodiment of the present invention;
Figure 2 schematically illustrates the network architecture of the system according to one embodiment of the present invention;
Figure 3 schematically illustrates the mapping of the protocol stacks between the radio interface and the core network according to one embodiment of the present invention;
Figure 4 schematically illustrates the unit that implements the method according to one embodiment of the present invention;
Figure 5 schematically illustrates the acts of the method according to one alternative embodiment of the present invention.

## Description of Preferred Embodiments

The invention proposes a telecommunication method for allocating radio capacity, or radio resources, to an application data flow in an Orthogonal Frequency Code Division Multiple Access (OFCDMA) access network. It also proposes a telecommunication system which is arranged for allocating radio capacity, or radio resources, to an application data flow in a OFCDMA access network.

The present allocation method and system are illustrated with an example of a Base Station (BS) allocating radio capacity and are particularly relevant in a Beyond 3G/4G context where the network is IP-based and where the BS is linked to the IP-core network through IP routers.

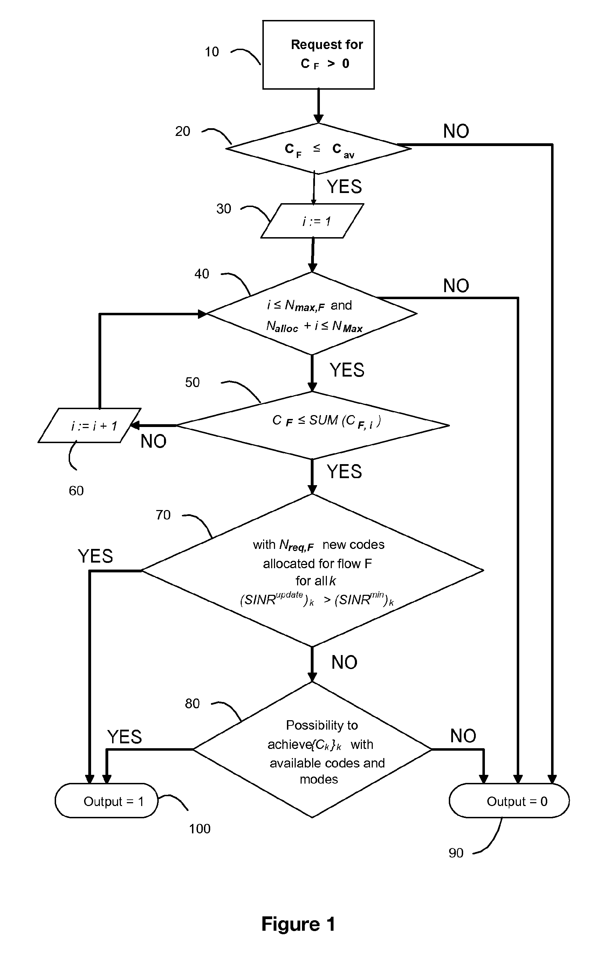

However it is also within the scope of the present invention to perform the method illustrated in Figure 1 at any type of radio emitter or transmitter.

The OFCDMA technology applies spreading in the frequency domain, where each user is assigned an individual code to differentiate the signal from other users' signals. The total radio capacity of the OFCDMA access network corresponds to the radio resources, or codes, available on said OFCDMA access network. The total radio capacity (or the whole set of codes for a given Base Station) is spread among the users of the OFCDMA access network attached to said Base Station. In the OFCDMA technology, a mode is a code with a modulation; a code can be combined with only one possible modulation. The level of radio capacity, or radio resources, represented by a code is used to transmit a certain amount of application data at a certain bit rate.

In the description of the present example of embodiment, u denotes a user using an application A. A user u may exchange several application data flows with one or several applications. An example of application is a video streaming application delivered from an application server located in the operator core network or a third-party application server to a user u using a User Equipment (UE) located in the coverage of one of the operator's OFCDMA access networks.

In the following detailed description, variables are time-dependent.

The Quality of Service (QoS) is characterized in the present invention by a capacity of an application data flow in terms of bitrate.

$C_{av}$ represents the available capacity in terms of radio resources at the BS of the OFCDMA access network that can be estimated at least by theoretical formula. $C_{av}$ corresponds to the capacity for the codes that are not allocated at time t by the BS. At the BS, $N_{Max}$ codes can be allocated at any time to application data flows. The algorithm described in Figure 1 depends on the time. At time $t$, $N_{Alloc}$ codes are already allocated to the existing application data flows. At time $t$, $C_{F,i}$ is the capacity available for the $i^{th}$ code for the application data flow F among the available codes that can be potentially allocated and knowing that $N_{Alloc}$ codes are already allocated. For each application data flow F, $N_{Max,F}$ is the maximum number of codes that can be allocated to said application data flow F.

The present method allows for an improved capacity allocation: an application data flow F of an application A of a user u requires a capacity $C_u$ (requested bit rate for the application) that cannot be served with the already allocated capacity or which is requested by a new incoming application data flow of the application A and where:

- Any new application data flow F triggers the need for capacity and therefore one or several codes are allocated if possible
- *If* $N_{max,F} = 1$ only one code can be allocated to the application data flow F

- **$N_{Max,F}$** varies over time or on other constraints. The radio capacity (or radio resources) is expressed as:

$$C^{F,i} = \log(1 + SINR^{F,i}).B \qquad (1)$$

where B is the bandwidth used for transmission, in Hz. At the User Equipment (UE) view, the Signal to Interference-plus-Noise Ratio (SINR) expression is represented by:

$$SINR^{F,i} = \frac{\sum_{i} p_{F,i}.h_F}{\alpha.\sum_{\substack{v \neq F \\ j \neq i}} p_{v,j}.h_j + \sigma_n^2} \qquad (2)$$

P is the power of the signal. The path gain for the application data flow F, including shadowing and fading effect, is represented by $h_F$. The noises and interferences to a mobile user come from different sources:

- other users with non-orthogonal signals

- Average White Gaussian Noise (AWGN): $\sigma_n^2$

where $\alpha$ is the orthogonal factor.

As an example in the present embodiment, the Resource ReSerVation Protocol (RSVP) is used to provide the information of Quality of Service indicating the requested capacity for each application. RSVP, described in the Internet Engineering Task Force (IETF) recommendation RFC 2205, is a Transport layer protocol designed to reserve resources across a network. RSVP can be used by e.g. application servers or routers to request or deliver specific levels of quality of service (QoS) for application data flows. RSVP defines how applications place reservations or cancellations of resources.

In order to link or map directly application data flows on the OFCDMA radio interface, the Resource Reservation Protocol (RSVP) is used to reserve resources for those application data flows. Each flow is identified by two pairs of IP addresses and port numbers. RSVP provides the information on the associated QoS requested by a given application. An application data flow exchanged between an application server and a user hence contains the application data and the information on the associated QoS.

Figure 1 shows the procedure to allocate codes to application data flows. As an example of an embodiment of the present method, it shows the proposed principle to take into account the request coming from the RSVP specificity indicating the requested capacity for an application data flow. It is assumed that (j-1) application data flows are already transmitted on the OFCDMA access network. At time t, an $j^{th}$ application data flow F requested by user u and containing information (provided by the RSVProtocol) on the requested level of QoS (requested bit rate for the application) is transmitted from the application server to the user u through the network. Said application data flow is first transmitted from the application server to the BS on the fixed part of the network then, from the BS to the UE, on the radio part of the access network. The total capacity available at the BS is $C_{av}(t)$ and the total capacity at time t is $C_{tot}(t)$.

In an act 10, a flow F of an application A of a user u requires a capacity $C_F > 0$ that is either a capacity extension of an existing application data flow of application A or which is a new incoming application data flow of the application A.

In a further act 20, the capacity $C_F$ is compared to the available capacity on the OFCDMA access network $C_{av}(t)$. Said available capacity $C_{av}(t)$ ought to be greater than the requested capacity $C_F$. If not, the requested capacity $C_F$ cannot be allocated (as seen in act 90).

In a further act 30, an iteration process is started with i=1. The outcome of the iteration, comprising steps 40 to 60, is to determine how many available codes will be allocated in order to provide enough capacity to transmit the requested bit rate for application A.

A further act 40 is performed to check whether the iteration process is continued. Act 40 comprises two conditions, ie:

- if i is not greater than the maximum number of codes for the application data flow F $N_{Max,F}$ on the one hand and,
- if the sum of the number of allocated codes $N_{alloc}$ and i is not greater than the maximum number of codes $N_{Max}$ for said BS of the OFCDMA access network on the other hand.

If any of these two conditions fails, the requested capacity $C_F$ cannot be allocated (as seen in act 90). These verifications allow checking that the maximum number of allocated codes for the application data flow F and the maximum number of allocated codes at the BS level will not be exceeded. If these conditions are not met, the requested capacity cannot be provided.

A further act 50 is performed to check if more codes need to be allocated. The requested capacity $C_F$ is compared with the sum on i of $\{C_{F,i}\}$ which corresponds to the total capacity for the first i codes (the capacity $C_{F,i}$ of the code i may vary for each i). If the sum on i of $\{C_{F,i}\}$, or the capacity for the i selected codes, is greater than the requested capacity $C_F$ then the requested capacity for the application data flow F may be transmitted using the i codes selected in the algorithm and act 70 is implemented. Otherwise, i is incremented by 1 in an act 60 and act 40 is implemented again.

When reaching act 70, the value of i represents the number of codes $N_{Req,F}$ necessary for providing the application data flow F with the requested capacity.

In act 70, for each existing radio transmitted application data flow k using the capacity $C_k$, it is checked that the ready-to-be-allocated $N_{Req,F}$ codes will not affect the already allocated codes. This is achieved by ensuring that the new Signal to Interference-plus-Noise Ratio $(SINR^{update})_k$ is greater than the minimum (requested) Signal to Interference-plus-Noise Ratio $(SINR^{min})_k$ for each existing radio transmitted application data flow k. If it does not affect the existing radio transmitted application data flow k, then the capacity represented by the sum on i of $\{C_{F,i}\}$ (capacity for the i selected codes) is allocated to the application data flow F (as seen in act 100), otherwise act 80 is implemented.

In a further act 80, if the allocation of the i selected codes to the application data flow F interferes with the existing transmissions using the already allocated codes then the possibility to achieve the $\{C_k\}$ capacities, including $C_F$, with available codes and modes by reallocating all codes and modes for each application data flow is checked or simulated. If the possibility is positive, then new codes and modes are re-allocated to all the application data flows including F (act 100). If it is not possible, the requested capacity $C_F$ cannot be provided without degrading, or deteriorating, the existing transmissions. It is thus either not possible to allocate the necessary code(s) to provide the requested capacity (act 90) or some codes may be allocated but some of the transmissions are deteriorated.

By using the method described in Figure 1:

- one code may only be allocated to one application data flow and cannot be shared between several application data flows;
- one or more codes may be allocated to one data flow.

As an additional embodiment of the invention, Act 10 and 20 for checking whether the required increase of bit rate required for a flow can be fulfilled with the bit rate that can be provided by allocating the remaining unallocated codes, may be executed in the following way:

- predict roughly the capacity of the bit rate that can be provided by allocating the remaining unallocated codes, i.e. the available capacity, noted CAVpred;
- compare CAVpred with the increase of bit rate required by the flow;
- if CAVpred is greater or equal to the required increase of bit rate, then Act 30 is executed, otherwise Act 90 is executed. This extension optimizes the algorithm by preventing entering the loop in the case that the available capacity is certain to be insufficient to fulfil the required increase of bit rate.

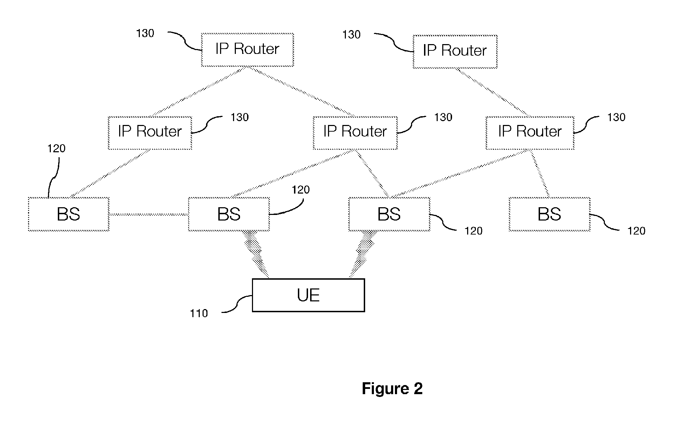

Figure 2 shows the architecture of the network illustrated in the present embodiment and which comprises at least one User Equipment 110, at least one Base Station (BS) 120 and at least one IP router 130.

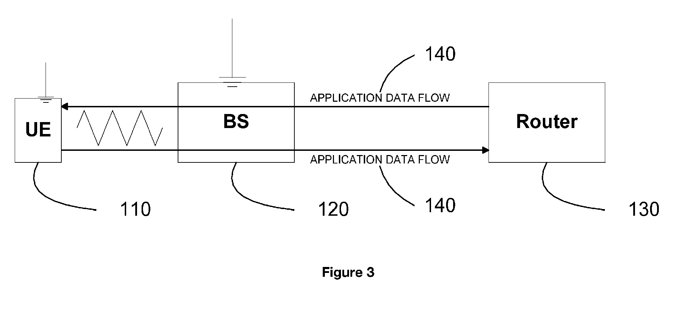

The elements presented in Figure 2 are detailed in the system in Figure 3 in order to describe the implementation of the method according to the present invention and where:

- a UE sends a request to use an application;
- the method according to the invention is implemented in the BS.

Figure 3 shows an application data flow 140 conveyed by the IP router(s) 130 to the BS 120 the UE 110 is attached to. Said application data flow 140 contains the information of QoS provided by the RSVP information that indicates the requested capacity for the application that is sending the application data flow. When said application data flow reaches the BS, the method described in Figure 1 is implemented by the BS in order for the BS to allocate the corresponding, or matching, radio resources necessary to convey the application data flow to or from the UE. In order to communicate from the UE, a signalling protocol is used between the BS and the UE to provide the UE with the allocated codes to use for the uplink communication of application data flows.

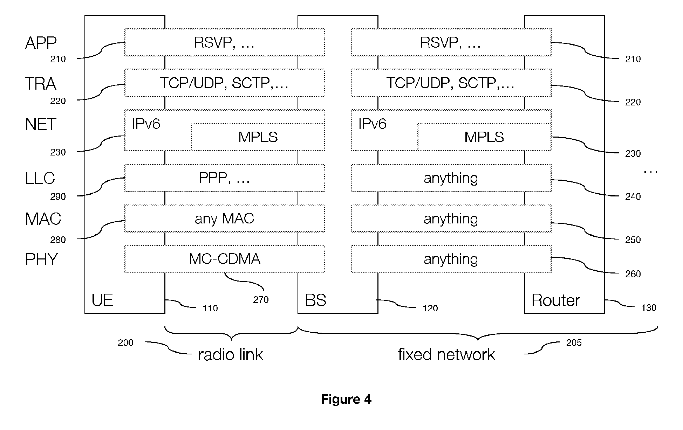

Figure 4 illustrates the protocol stacks between an IP router 130 and a BS 120 on the fixed network 205 and between a BS 120 and a UE 110 on the radio link 200 of the access network.

Between the application and the user, the application data flow is situated at the application level 210 of the protocol stacks and contains the information of QoS in a RSVP information (for example). It is encapsulated at the Transport layer 220 into a Transport protocol, such as e.g. TCP, UDP or SCTP, which is encapsulated at the Network layer 230 into a network protocol, such as e.g. IP/MPLS.

On the fixed network 205 (core network), the Network protocol is encapsulated into any type of LLC 240 and MAC 250 protocols, then the MAC protocol 250 uses any type of Physical layer 260.

On the radio link 200 of the OFCDMA access network, the Network protocol layer is encapsulated into any type of LLC protocol 290, such as e.g. PPP. The LLC protocol is encapsulated into any type of MAC protocol 280. The MAC protocol uses the OFCDMA Physical layer 270 to communicate with the UE.

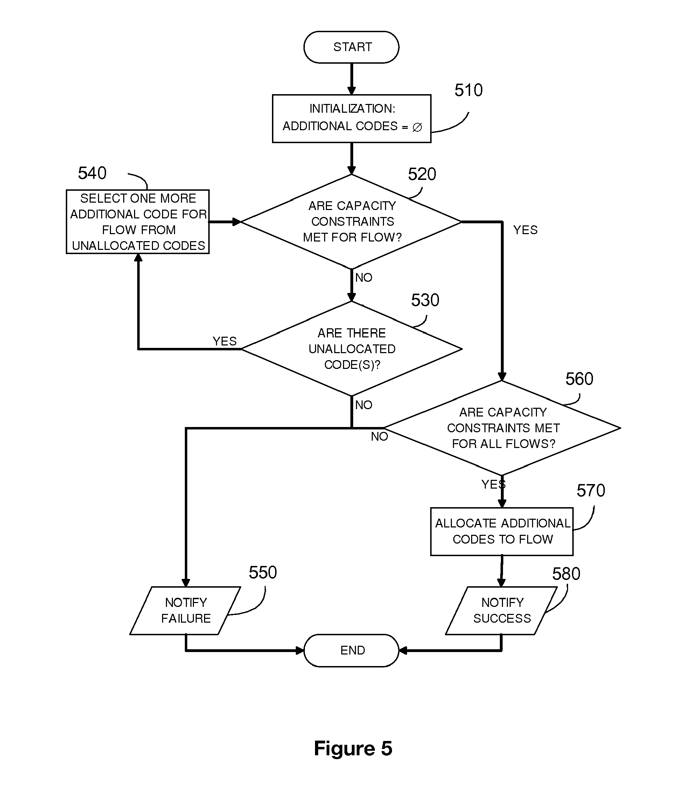

Figure 5 describes an alternative embodiment of the embodiment described in Figure 1.

Act 510 corresponds to the initialization process which consists in starting with an empty set of additional code (s). Thus, using the variable i described in Figure 1, it corresponds to starting with i=0 (instead of starting with i=1 like described in Figure 1). In that way, the case of increasing the capacity/number of code(s) for a flow which has already been allocated some code(s) can be taken into account (if more capacity/code(s) than necessary had been previously allocated).

The act 520 in Figure 5 is a generalization of the Act 50 in Figure 1: it allows checking if the capacity constraints are met for the flow.

The act 530 in Figure 5 is a generalization of the Act 40 in Figure 1: it allows checking whether there are unallocated code(s) or not.

The act 540 in Figure 5 is a generalization of the Act 60 in Figure 1: it allows selecting one more additional code for the flow from unallocated code(s).

The act 560 in Figure 5 is a generalization of the Act 70 in Figure 1: it allows checking whether the capacity constraints are met for all flows.

Act 570 describes the allocation of additional code(s) to the flow.

Act 550 corresponds to a failure result of allocation (idem act 90 in Figure 1).

Act 580 corresponds to a success result of allocation (idem act 100 in Figure 1). As an additional embodiment of the invention, before Act 570 is executed to effectively allocate codes for a flow, an act may be added to check if that allocation meets policy requirements. If the policy requirements are not met, allocation is not performed, and Act 550 is executed; otherwise, Act 570 is executed to perform the allocation. More specifically, the policy may specify a maximum number of codes that may be allocated to one flow at any time. As another specific embodiment of this invention, the policy may specify a maximum number of codes that may be allocated to all the flows to/from one UE collectively at any time.

As specific embodiment of the invention, before Act 510, an act may be added to perform a preliminary check whether the required increase of bit rate required for a flow can be fulfilled with the bit rate that can be provided by allocating the remaining unallocated codes, by executing the following steps:

- predict roughly the capacity of the bit rate that can be provided by allocating the remaining unallocated codes, i.e. the available capacity, noted CAVpred;
- compare CAVpred with the increase of bit rate required by the flow;
- if CAVpred is greater or equal to the required increase of bit rate, then Act 510 is executed, otherwise Act 550 is executed. This extension optimizes the algorithm by preventing entering the loop in the case that the available capacity is certain to be insufficient to fulfil the required increase of bit rate.

**Claims**

1. A method for allocating capacity to an application data flow in an Orthogonal Frequency Code Division Multiple Access (OFCDMA) access network, the total capacity provided by the radio interface of said OFCDMA access network being spread over a plurality of codes, said application data flow requiring a level of Quality of Service (QoS), said method comprising the acts of:

   - selecting among the non allocated codes if any, one code that can ensure the application data flow level of QoS, and allocating the selected code to said application data flow,
   - selecting a plurality of codes when no single code can ensure said level of QoS, so that the allocation of said plurality of codes to the application data flow ensures said level of QoS, and allocating said plurality of codes to said application data flow.

2. A method according to claim 1 wherein the method comprises a preliminary act of receiving information on the level of QoS.

3. A method according to claim 2 wherein said information comprises Resource ReSerVation Protocol (RSVP) information.

4. A method according to any of the preceding claims further comprising a preliminary act of verifying if the capacity required to ensure the level of QoS is lower than the available capacity on the radio interface.

5. A method according to any of the preceding claims further comprising, prior to allocating the selected code(s), an act of verifying that the allocation of said code(s) will not interfere with the application data flows associated to the already allocated code(s).

6. A method according to claim 5 further comprising, prior to allocating the selected code(s) and if the allocation of said code(s) would interfere with application data flows associated to the already allocated code(s), an act of verifying that the re-allocation of said code(s) and already allocated code(s) will provide the required capacity for allocated application data flow.

7. A telecommunication system comprising:

   - a Orthogonal Frequency Code Division Multiple Access (OFCDMA) access network, comprising a Base Station, the total capacity provided by the radio interface of said Base Station being spread over a plurality of codes,
   - a telecommunication equipment, said telecommunication equipment exchanging an application data flow with said Base Station, said application data flow requiring a level of Quality of Service (QoS), the Base Station being arranged to:
   - select among the non allocated codes if any, one code that can ensure the application data flow level of QoS, and allocate the selected code to said application data flow,
   - select a plurality of codes when no single code can ensure said level of QoS, so that the allocation of said plurality of codes to the application data flow ensures said level of QoS, and allocate said plurality of codes to said application data flow.

8. A telecommunication system according to claim 7 wherein the BS is arranged to receive information on the level of QoS.

9. A telecommunication system according to claim 8 wherein said information comprises Resource ReSerVation Protocol (RSVP) information.

10. A telecommunication system according to any of the preceding claims 7 to 9 wherein the BS is further arranged to verify if the capacity required to ensure the level of QoS is lower than the available capacity on the radio interface.

11. A telecommunication system according to any of the preceding claims 7 to 9 wherein the BS is further arranged to, prior to allocating the selected code(s), verify that the allocation of said code(s) will not interfere with application data flows associated to the already allocated code(s)

12. A telecommunication system according to claim 11 wherein the BS is further arranged to, prior to allocating the selected code(s) and if the allocation of said code(s) would interfere with application data flows associated to the already allocated code(s), verify that the re-allocation of said code(s) and already allocated code(s) will provide the required capacity for each application data flow.

13. A Base Station of a telecommunication network, comprising means for allocating capacity to an application data flow in a Frequency Orthogonal Code Division Multiple Access (OFCDMA) network, the total capacity provided by the radio interface of said OFCDMA network being spread over a plurality of codes, said application data flow requiring a level of Quality of Service (QoS), said base station being arranged to:

   - select among the non allocated codes if any, one code that can ensure the application data flow level of QoS, and allocating the selected code to said application data flow,
- select a plurality of codes when no single code can ensure said level of QoS, so that the allocation of said plurality of codes to the application data flow ensures said level of QoS, and allocating said plurality of codes to said application data flow.

14. A Base Station according to claim 13, comprising means to receive information on the level of QoS.

15. A Base Station according to claim 14, wherein the information comprises Resource ReSerVation Protocol (RSVP) information.

16. A Base Station according to any of the preceding claims 13 to 15, further comprising means to verify if the capacity required to ensure the level of QoS is lower than the available capacity on the radio interface.

17. A Base Station according to any of the preceding claims 13 to 16, further comprising means to, prior to allocating the selected code(s), verify that the allocation of said code(s) will not interfere with the application data flows associated to the already allocated code(s).

18. A Base Station according to claim 17 further comprising means to, prior to allocating the selected code(s) and if the allocation of said code(s) would interfere with the application data flows associated to the already allocated code (s), verify that the re-allocation of said code(s) and already allocated code(s) will provide the required capacity for allocated application data flow.

19. A computer program providing computer executable instructions stored on a computer readable medium, which when loaded on to a data processor causes the data processor to perform a method for allocating capacity to an application data flow in an Orthogonal Frequency Code Division Multiple Access (OFCDMA) access network according to claims 1 to 6.

**Figure 1**

**Figure 2**

140

APPLICATION DATA FLOW

| UE | | BS | | Router |

APPLICATION DATA FLOW

110     120     140     130

Figure 3

**Figure 4**

**Figure 5**

**EP 2 066 087 A1**

**European Patent Office**

**EUROPEAN SEARCH REPORT**

Application Number

EP 07 30 1610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 855 424 A (MATSUSHITA ELECTRIC IND CO LTD [JP]) 14 November 2007 (2007-11-14) <br> * abstract * <br> * column 1, paragraph 1 - paragraph 3 * <br> * column 6, paragraph 28 - column 11, paragraph 63 * <br> * column 13, paragraph 67 - column 14, paragraph 71 * <br> * column 16, paragraph 79 - column 17, paragraph 83 * <br> * column 18, paragraph 90 - column 21, paragraph 104 * <br> * claims 1,18,19 * <br> * figures 1,4 * <br> ----- | 1-19 | INV. <br> H04L12/56 |
| Y | US 6 850 504 B1 (CAO QIANG [GB] ET AL) 1 February 2005 (2005-02-01) <br> * abstract * <br> * column 1, line 9 - line 12 * <br> * column 1, line 14 - line 35 * <br> * column 1, line 64 - column 2, line 67 * <br> * column 3, line 22 - column 4, line 24 * <br> * claims 1-9 * <br> * figures 1-3,6 * <br> ----- | 1-19 | |
| A | US 5 892 769 A (LEE WHAY CHIOU [US]) 6 April 1999 (1999-04-06) <br> * abstract * <br> * column 1, line 5 - line 26 * <br> * column 3, line 45 - column 4, line 47 * <br> * column 16, line 23 - line 44 * <br> * claim 1 * <br> * figures 1-3 * <br> ----- | 1-19 | TECHNICAL FIELDS SEARCHED (IPC) <br><br> H04L |

The present search report has been drawn up for all claims

| Place of search | Date of completion of the search | Examiner |
|---|---|---|
| Munich | 28 April 2008 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 07 30 1610

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2008

| Patent document cited in search report | | Publication date | Patent family member(s) | | Publication date |
|---|---|---|---|---|---|
| EP 1855424 | A | 14-11-2007 | WO 2007131558 A1 | | 22-11-2007 |
| US 6850504 | B1 | 01-02-2005 | AU | 708516 B2 | 05-08-1999 |
| | | | AU | 8959198 A | 03-06-1999 |
| | | | BR | 9804044 A | 14-12-1999 |
| | | | CA | 2248490 A1 | 30-04-1999 |
| | | | CN | 1223516 A | 21-07-1999 |
| | | | ID | 21223 A | 06-05-1999 |
| | | | JP | 3144778 B2 | 12-03-2001 |
| | | | JP | 11215549 A | 06-08-1999 |
| US 5892769 | A | 06-04-1999 | NONE | | |

For more details about this annex : see Official Journal of the European Patent Office, No. 12/82